# EUROPÄISCHE PATENTSCHRIFT

(11) **EP 1 635 163 B1**
(45) Veröffentlichungstag und Bekanntmachung des Hinweises auf die Patenterteilung: **31.05.2017**
(21) Anmeldenummer: 05018740.0
(22) Anmeldetag: 30.08.2005
(51) Int. Cl.: G01N 21/35, G01N 21/47, G08G 1/16, G08B 19/02, G08G 1/0967, G08G 1/0962, B60Q 1/00, B60T 8/172, G01J 1/04, G01S 17/88, G08G 1/04

(54) **Kraftfahrzeug mit einer Vorrichtung zur Bestimmung der Beschaffenheit einer Oberfläche einer Fahrbahn**
Motor vehicle comprising a device for determining a surface condition of a roadway
Automobile comprenant un dispositif pour déterminer la condition de la surface d'une chaussée

(30) Priorität: 09.09.2004 US 608319 P
(43) Veröffentlichungstag der Anmeldung: 15.03.2006
(73) Patentinhaber: Volkswagen Aktiengesellschaft, 38440 Wolfsburg (DE); AUDI AKTIENGESELLSCHAFT, 85045 Ingolstadt (DE)
(72) Erfinder: Stoschek, Arne, 94303 Palo Alto CA (US); Dupont, Cedric, 94110 San Francisco CA (US); Münchhoff, Jan, 85049 Ingolstadt (DE)

(56) Entgegenhaltungen:
- DE-A1- 4 133 359
- DE-A1- 4 235 104
- DE-A1- 19 747 017
- DE-B1- 2 712 199
- US-A- 5 962 853
- 'Auszug aus refractive index info, Refractive index database, Optical constants of H2O'

## Beschreibung

Die Erfindung betrifft eine Vorrichtung zur Bestimmung der Beschaffenheit einer Oberfläche einer Fahrbahn.

Eine solche Vorrichtung ist z.B. aus der US 5 497 100 bekannt.

Aus der WO 98/48296 ist eine Radar-Anordnung zur Straßenzustandserkennung in einem Kraftfahrzeug bekannt, bei welcher eine Sende-Empfangs-Antennenanordnung ein in horizontaler und vertikaler Richtung eng gebündeltes Antennendiagramm aufweist, das einen Fahrbahnabschnitt innerhalb eines Entfernungsbereichs zwischen 10 m und 100 m in Fahrtrichtung vor dem Fahrzeug ausleuchtet, und bei welcher Empfangseinrichtungen Echosignale aus dem ausgeleuchteten Fahrbahnausschnitt aufnehmen und daraus eine Einordnung des Fahrbahnzustands in den Fahrbahnabschnitt in vorgegebene Straßenzustandskategorien ableiten. Dabei werden die Echosignale in Entfemungsbereiche unterteilt aufgenommen und ausgewertet.

Aus der WO 01/04659 ist eine Vorrichtung zur Fahrbahnzustandserkennung in einem Kraftfahrzeug bekannt, wobei die Vorrichtung zur Fahrbahnzustandserkennung einen Fahrbahnabschnitt innerhalb eines Entfernungsbereichs zwischen 2 m und 200 m in Fahrtrichtung vor dem Fahrzeug ausleuchtet und mittels Empfangseinrichtungen Echosignale aus dem ausgeleuchteten Fahrbahnausschnitt aufnimmt, um daraus eine Einordnung des Fahrbahnzustands im Fahrbahnabschnitt in vorgegebene Zustandskategorien abzuleiten, wobei ein Millimeterwellen-Radar, welches ein in horizontaler und vertikaler Richtung eng gebündeltes Antennendiagramm aufweist, mit einem Infrarot-Laser-Radar kombiniert wird, wobei das Millimeterwellen-Radar und das Infrarot-Laser-Radar auf den gleichen Fahrbahnabschnitt ausgerichtet sind, und wobei das Millimeterwellen-Radar und das Infrarot-Laser-Radar mit einer gemeinsamen Auswerteeinheit verbunden sind.

Die EP 0 470 506 B1 offenbart ein Sensorsystem zur Erkennung des Oberflächenzustandes auf einer Fahrbahn, wobei ein Infrarotsender und -empfänger mit Filtern ausgebildet ist und zum kombinierten Betrieb mit einem Mikrowellensender und -empfänger verknüpft ist, wobei Signale der Infrarot- bzw. Mikrowellenempfänger mittels logischer Netzwerke aufbereitet werden und ausgangsseitig über ein oder mehrere Gatter miteinander verknüpft werden, wobei am Ausgang des Gatters und der logischen Netzwerke oder am Ausgang der Gatter Zustandsanzeigen ausgebildet sind, wobei mittels eines XOR-Gatters die einzelnen Zustandsanzeigen auf ihre logische Zustandsrichtigkeit überprüft werden und das Ergebnis seinerseits über eine eigene Zustandsanzeige zur Anzeige gebracht wird.

Die DE 41 33 359 A1 offenbart ein Verfahren zur Messung der Dicke einer auf einer Fahrbahn vorhandenen Wasserschicht, wobei mittels einer Lichtquelle ein im Raumwinkel begrenzter Lichtstrahl auf die Fahrbahn ausgesendet und das von der Fahrbahn zurück gestreute, bei einer vorhandenen Wasserschicht diese durchdringende Licht selektiv auf wenigstens zwel im nahen Infrarotbereich liegende Wellenlängen abgetastet und aus den Amplituden der selektiv abgetasteten zurück gestreuten Lichtströme die Dicke der Wasserschicht erfasst und mittels einer Anzeigeeinheit angezeigt wird.

Die US 5 962 853 offenbart ein Verfahren zum Feststellen des Oberflächenzustandes, insbesondere von Verkehrswegen hinsichtlich Trockenhelt, Nässe oder Vereisung, bei dem die Oberfläche mit einer Strahlungsquelle mit Infrarotanteil bestrahlt wird und die reflektierte Strahlung gleichzeitig in verschledenen Wasser und Eis charakterislerenden Wellenlängenbereichen gemessen wird, wobei abhängig von den gemessenen Signalen eine Aussage über den Oberflächenzustand getroffen wird, wobei die reflektierte Strahlung gleichzeitig in mindestens vier Wellenlängenbereichen selektiv gemessen wird, die im Bereich zwischen 800 und 1250 nm liegen, wobei ein erster und ein zweiter Wellenlängenbereich so gewählt werden, dass sie von einer Absorption der Wassermoleküle, unabhänglg vom Aggregatzustand, wenig beeinflusst werden, und ein dritter und vierter Wellenlängenbereich so gewählt werden, dass sie kennzeichnend für Wasser und Eis sind, und dass ein durch die Eindringtiefe hervorgerufener Einfluss des Untergrundes auf die im dritten und vierten Wellenlängenbereich gemessenen Signale mittels der Information der im ersten und zweiten Wellenlängenbereich gemessenen Signale kompensiert wird

Die DE 42 35 104 A1 offenbart eine Einrichtung zum Erkennen des Zustandes der vor einem bewegten Fahrzeug liegenden Straßenoberfläche mit von diesem Fahrzeug aus mit zwei einstellbaren, jeweils aus Lichtsender und Lichtempfänger bestehenden Lichtsende- und Empfangssystemen, deren Lichtempfänger von einem vom jeweils zugeordneten Lichtsender beleuchteten Straßenoberflächenstück reflektierte Lichtsignale detektieren und einer Auswerteeinheit zuführen, wobei die beiden Lichtsende- und Empfangssysteme so am Fahrzeug angeordnet sind, dass sie dasselbe Straßenoberflächenstück unter unterschiedlichen Elevationswinkeln beleuchten und optisch abtasten, so dass die Auswerteeinheit eine Korrelation der von beiden Lichtempfängern detektierten Signale vornimmt, den Korrelationsspitzenwert mit abgespeicherten für unterschiedliche Oberflächenrauhigkeiten ermittelten Erfahrungswerten vergleicht und eine Folgereaktion auslöst, wenn das Vergleichsergebnis auf einen Zustand geringer Rauhigkeit der Straßenoberfläche hinweist. Dabei ist vorgesehen, dass die Lichtsende- und Empfangssysteme in einer auf der Fahrzeuggrundfläche senkrecht stehenden, zur Fahrzeuglängsachse parallelen Ebene schwenkbar angeordnet sind, so dass ihr Abstrahlwinkel in Bezug auf die Fahrzeuggrundfläche geschwindigkeitsabhängig automatisch verstellbar ist und eine geschwindigkeitsabhängige Veränderung der Distanz zwischen dem beleuchteten Straßenoberflächenstück und dem Fahrzeug erlaubt.

Es ist Aufgabe der Erfindung, eine verbesserte Vorrichtung zur Bestimmung der Beschaffenheit einer Oberfläche einer Fahrbahn anzugeben.

Vorgenannte Aufgabe wird durch eine Vorrichtung zur Bestimmung der Beschaffenheit einer Oberfläche einer Fahrbahn gelöst, wobei die Vorrichtung einen lichtempfindlichen Sensor zur Messung eines von der Oberfläche der Fahrbahn reflektierten Lichtsignals und einen Analysator zur Bestimmung der Beschaffenheit der Oberfläche der Fahrbahn in Abhängigkeit der Leistung des Lichtsignals bei einer ersten Wellenlänge im Infrarotbereich, bei einer zweiten Wellenlänge im Infrarotbereich sowie bei zumindest einer dritten Wellenlänge im Infrarotbereich umfasst. gemäß Anspruch 1 gelöst.

In einer Ausgestaltung der Erfindung ist die Beschaffenhelt der Oberfläche der Fahrbahn mittels des Analysators In Abhängigkeit des Verhältnisses der Leistung des Lichtsignals bei der ersten Wellenlänge zur Leistung des Lichtsignals bei der zweiten Wellenlänge, in Abhängigkeit des Verhältnisses der Leistung des Lichtsignals bei der ersten Wellenlänge zur Leistung des Lichtsignals bel der dritten Wellenlänge und/oder in Abhängigkeit des Verhältnisses der Leistung des Lichtsignals bei der dritten Wellenlänge zur Leistung des Lichtsignals bei der zweiten Wellenlänge bestimmbar. Eine solche Bestimmung kann zusätzlich oder alternativ zur Bestimmung der Beschaffenheit der Oberfläche der Fahrbahn in Abhängigkeit der nicht in ein Verhältnis gesetzten Leistung des Lichtsignals bei der ersten Wellenlänge im Infrarotbereich, bei der zweiten Wellenlänge im Infrarotbereich und/oder bei der dritten Wellenlänge im Infrarotbereich erfolgen

So kann die Beschaffenheit der Oberfläche der Fahrbahn mittels des Analysators z. B. in Abhängigkeit des Verhältnisses der Leistung des Lichtsignals bei der ersten Wellenlänge zur Leistung des Lichtsignals bei der zweiten Wellenlänge und in Abhängigkelt der nicht In ein Verhältnis gesetzten Leistung des Lichtsignals bei der ersten Wellenlänge im Infrarotbereich, bei der zweiten Wellenlänge im Infrarotbereich und bei der dritten
Wellenlänge im Infrarotbereich bestimmbar sein. Es kann die Beschaffenheit der Oberfläche der Fahrbahn mittels des Analysators z. B. auch in einer weiteren Ausgestaltung der Erfindung in Abhängigkeit des Verhältnisses der Leistung des Lichtsignals bei der ersten Wellenlänge zur Leistung des Lichtsignals bei der zweiten Wellenlänge, in Abhängigkeit des. Verhältnisses der Leistung des Lichtsignals bei der ersten Wellenlänge zur Leistung des Lichtsignals bei der dritten Wellenlänge und in Abhängigkeit des Verhältnisses der Leistung des Lichtsignals bei der dritten Wellenlänge zur Leistung des Lichtsignals bei der zweiten Wellenlänge sowie in Abhängigkeit der nicht in ein Verhältnis gesetzten Leistung des Lichtsignals bei der ersten Wellenlänge im Infrarotbereich, bei der zweiten Wellenlänge im Infrarotbereich und bei der dritten Wellenlänge im Infrarotbereich bestimmbar sein.

In einer weiteren Ausgestaltung der Erfindung liegt die erste Wellenlänge in einem Bereich zwischen 950 nm und 850 nm. In einer weiteren Ausgestaltung der Erfindung liegt die zweite Wellenlänge in einem Bereich zwischen 900 nm und 800 nm. In einer weiteren Ausgestaltung der Erfindung liegt die dritte Wellenlänge in einem Bereich zwischen 850 nm und 750 nm.

In einer weiteren Ausgestaltung der Erfindung ist die Beschaffenheit der Oberfläche der Fahrbahn mittels des Analysators in Abhängigkeit des Verhältnisses der Leistung des Lichtsignals bei weniger als zehn unterschiedlichen Wellenlängen bestimmbar.

In einer Ausgestaltung der Erfingung liegt die erste Wellenlänge in einem Bereich zwischen 950 nm und 800 nm. In einer weiteren Ausgestaltung der Erfindung liegt die zweite Wellenlänge in einem Bereich zwischen 900 nm und 750 nm.

In einer weiteren Ausgestaltung der Erfindung ist die Beschaffenheit der Oberfläche der Fahrbahn mittels des Analysators in Abhängigkeit des Verhältnisses der Leistung des Lichtsignals bei weniger als zehn unterschiedlichen Wellenlängen bestimmbar.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Fahrbahn im Sinne der Erfindung ist insbesondere eine geteerte Straße, jedoch nicht auf geteerte Straßen beschränkt.

Die Beschaffenheit einer Oberfläche einer Fahrbahn im Sinne der Erfindung kann ein Fahrbahnzustand, ein Straßenzustand oder ein Oberflächenzustand einer Fahrbahn sein. Die Beschaffenheit einer Oberfläche einer Fahrbahn im Sinne der Erfindung kann
ein eine Rauhigkeit und/oder ein ,Material' wie z.B. Eis, Wasser auf Asphalt oder eine trockene Straßenoberfläche sein.

Eine Wellenlänge im Sinne der Ansprüche soll nicht notwendigerweise auf eine singuläre Wellenlänge beschränkt sein. Eine Wellenlänge im Sinne der Ansprüche kann auch einen engen Bereich von Wellenlängen umfassen, den ein geeignetes optisches Filter passieren lässt oder den eine entsprechend geeignete Lichtquelle erzeugen kann. Wie eng dieser Bereich sein soll richtet sich nach den Ausgestaltungen geeigneter optischer Filter oder Lichtquellen. Der Bereich sollte jedoch möglichst eng gefasst werden.

Leistung eines Signals im Sinne der Erfindung soll Äquivalente mit umfassen, wie z.B. die Amplitude des Signals, dessen Betrag, dessen Quadrat oder ähnliches.

Weitere Vorteile und Einzelheiten ergeben sich aus der nachfolgenden Beschreibung von Ausführungsbeispielen.
- Fig. 1: zeigt ein Ausführungsbeispiel eines Kraftfahrzeuges mit einer Vorrichtung zur Bestimmung der Beschaffenheit einer Oberfläche einer Fahrbahn;
- Fig. 2: zeigt ein Ausführungsbeispiel einer Vorrichtung zur. Bestimmung der Beschaffenheit einer Oberfläche einer Fahrbahn;
- Fig. 3: zeigt ein Ausführungsbeispiel der Leistung eines von einer vereisten Fahrbahn reflektierten und gefilterten Lichtsignals;
- Fig. 4: zeigt ein Ausführungsbeispiel der Leistung eines von einer verschneiten Fahrbahn reflektierten und gefilterten Lichtsignals;
- Fig. 5: zeigt ein Ausführungsbeispiel eines mittels eines neuronalen Netzes implementierten Analysators; und
- Fig. 6: zeigt ein Ausführungsbeispiel eines Transportsystems.

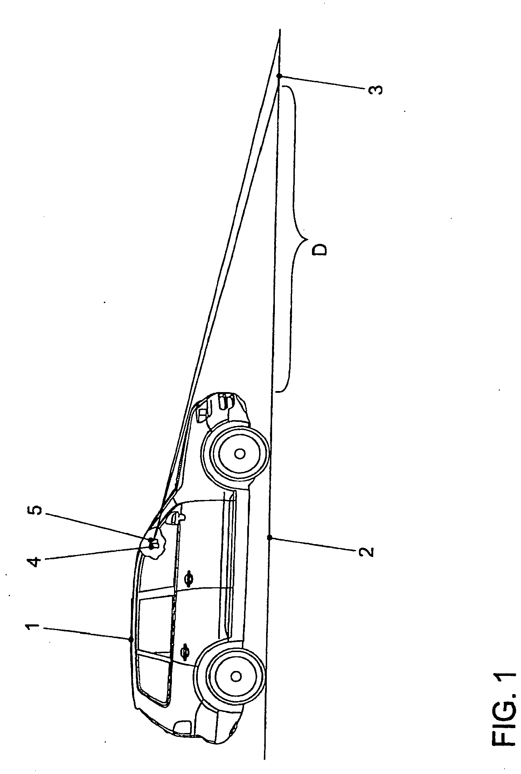

Fig. 1 zeigt ein Ausführungsbeispiel eines Kraftfahrzeuges 1 mit einer Vorrichtung 5 zur Bestimmung der Beschaffenheit einer Oberfläche einer Fahrbahn 2 auf der das Kraftfahrzeug 1 gefahren wird. In dem vorliegenden Ausführungsbeispiel ist die Vorrichtung 5 zur Bestimmung der Beschaffenheit der Oberfläche der Fahrbahn 2 im Bereich eines Rückspiegels 4 angeordnet. Es können jedoch auch andere Positionen, wie z.B. die Anordnung in einem Scheinwerfer, vorgesehen werden. In dem vorliegenden Ausführungsbeispiel ist vorgesehen, dass die Bestimmung der Beschaffenheit der Oberfläche der Fahrbahn 2 für einen Bereich 3 der Fahrbahn 2 erfolgt, der in einem Abstand D von etwa 5 m bis 40 m vor dem Kraftfahrzeug 1 liegt. Es kann auch vorgesehen sein, dass der Abstand D etwa 2 m bis 200 m beträgt. In vorteilhafter Ausgestaltung wird der Abstand D während des Betriebes des Kraftfahrzeuges 1 oberhalb einer Grenzgeschwindigkeit proportional zur Geschwindigkeit des Kraftfahrzeuges 1 eingestellt.

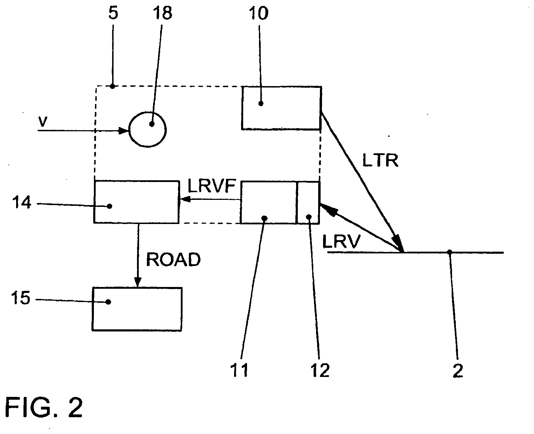

Fig. 2 zeigt ein Ausführungsbeispiel der Vorrichtung 5 zur Bestimmung der Beschaffenheit der Oberfläche der Fahrbahn 2. Die Vorrichtung 5 zur Bestimmung der Beschaffenheit der Oberfläche der Fahrbahn 2 umfasst einen Infrarotstrahler 10 zum Strahlen einer Infrarotstrahlung LTR auf die Fahrbahn 2 sowie einen lichtempfindlichen Sensor 11 zur Messung eines von der Oberfläche der Fahrbahn 2 reflektierten Lichtsignals LRV und zur Ausgabe eines entsprechenden Messsignals, dass im folgenden als gefiltertes Lichtsignal LRVF bezeichnet wird. Der Infrarotstrahler 10 kann auch weggelassen werden und/oder in seiner Funktion durch einen ohnehin vorhandenen Scheinwerfer ersetzt werden.

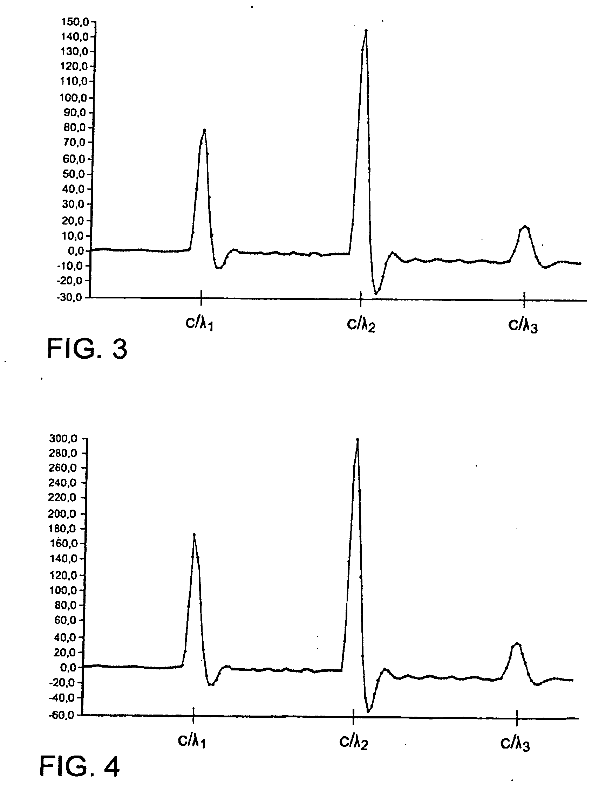

Vor dem lichtempfindlichen Sensor 11 ist ein optisches Filter 12 angeordnet, das Licht in einem Bereich um eine erste Wellenlänge von 905 nm herum, in einem Bereich um eine zweite Wellenlänge von 850 nm herum und in einem Bereich um eine dritte Wellenlänge von 780 nm herum passieren lässt. Fig. 3 zeigt ein entsprechendes Ausführungsbeispiel eines Spektrums der Leistung des von einer vereisten Fahrbahn reflektierten und gefilterten Lichtsignals LRVF, und Fig. 4 zeigt ein Ausführungsbeispiel eines Spektrums der Leistung eines von einer verschneiten Fahrbahn reflektierten und gefilterten Lichtsignals LRVF, wobei λ₁ die erste Wellenlänge, λ₂ die zweite Wellenlänge, λ₃ die dritte Wellenlänge und c die Lichtgeschwindigkeit bezeichnet.

Das in Fig. 2 dargestellte Ausführungsbeispiel der Vorrichtung 5 zur Bestimmung der Beschaffenheit der Oberfläche der Fahrbahn 2 umfasst zudem einen Analysator 14 zur Bestimmung der Beschaffenheit der Oberfläche der Fahrbahn 2 und zur Ausgabe einer entsprechenden Fahrbahnbeschaffenheitsangabe ROAD. Die Bestimmung der Beschaffenheit der Oberfläche der Fahrbahn 2 erfolgt dabei in Abhängigkeit der Leistung des Lichtsignals LRV bzw. LRVF bei der ersten Wellenlänge λ₁ bei der zweiten Wellenlänge λ₂ sowie bei zumindest der dritten Wellenlänge λ₃.

Der Infrarotstrahler 10, der lichtempfindliche Sensor 11 und der Analysator 14 können in einem Gehäuse oder separat angeordnet sein.

Anstelle der des optischen Filters 12 vor dem lichtempfindlichen Sensor kann auch vorgesehen sein, dass mittels des Infrarotstrahlers 10 im wesentlichen nur Licht der ersten Wellenlänge λ₁, der zweiten Wellenlänge λ₂ und der dritten Wellenlänge λ₃ abgestrahlt wird.

Das in Fig. 2 dargestellte Ausführungsbeispiel der Vorrichtung 5 zur Bestimmung der Beschaffenheit der Oberfläche der Fahrbahn 2 umfasst weiterhin einen Aktor 18 zur Ausrichtung der Vorrichtung 5 zur Bestimmung der Beschaffenheit der Oberfläche der Fahrbahn 2 in Abhängigkeit der Geschwindigkeit v des Kraftfahrzeuges 1 und damit zur Erzielung des gewünschten Abstandes D.

Die Fahrbahnbeschaffenheitsangabe ROAD ist für eine Senke 15 bestimmt, die z.B. eine Anzeige zum Anzeigen der Beschaffenheit der Oberfläche der Fahrbahn 2, wie etwa 'ICE!', 'WET CONDITION!', 'SNOW!', 'SLIPPERY!', 'DANGER!' usw., und/oder eine akustische Ausgabe der Beschaffenheit der Oberfläche der Fahrbahn 2 umfassen kann. Alternativ oder zusätzlich umfasst die Senke 15 Einrichtungen wie eine Luftfederungsadaption, eine Reifendruckadaption, eine Off-Road-Erkennung, eine Road Disturbance Detection, eine Federung (Active Vibration Control), automatische Bremsen, ein ABS (Anti-Blockier-System), ein ESP (elektronisches Stabilitätsprogramm) und ähnliche Systeme, eine ASR (Anti-Schlupf-Regelung), ein EDS, ein FZR, eine ANB (Notbremse), eine µ-Split-Erkennung, eine µ-Sprung-Erkennung (Erkennung einer abrupten oder schnellen Änderung Reibwertkoeffizienten) und/oder eine Aquaplaning-Warnung.

Die Beschaffenheit der Oberfläche der Fahrbahn 2 mittels des Analysators 14 kann z. B. in Abhängigkeit des Verhältnisses Pλ₁,/Pλ₂ der Leistung Pλ₁ des Lichtsignals LRV bzw. LRVF bei der ersten Wellenlänge λ₁ zur Leistung Pλ₂ des Lichtsignals LRV bzw. LRVF bei der zweiten Wellenlänge λ₂ und in Abhängigkeit der (nicht in ein Verhältnis gesetzten) Leistung PA, des Lichtsignals LRV bzw. LRVF bei der ersten Wellenlänge λ₁, der (nicht in ein Verhältnis gesetzten) Leistung Pλ₂ des Lichtsignals LRV bzw. LRVF bei der zweiten Wellenlänge λ₂ und der (nicht in ein Verhältnis gesetzten) Leistung Pλ₃ des Lichtsignals LRV bzw. LRVF bei der dritten Wellenlänge λ₃ bestimmbar sein.

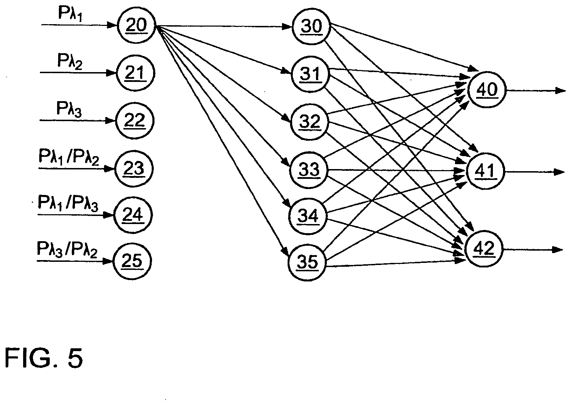

Im vorliegenden Ausführungsbeispiel ist vorgesehen, dass die Beschaffenheit der Oberfläche der Fahrbahn 2 mittels des Analysators 14 in Abhängigkeit des Verhältnisses Pλ₁/Pλ₂ der Leistung Pλ₁ des Lichtsignals LRV bzw. LRVF bei der ersten Wellenlänge λ₁ zur Leistung Pλ₂ des Lichtsignals LRV bzw. LRVF bei der zweiten Wellenlänge λ₂, in Abhängigkeit des Verhältnisses Pλ₁/Pλ₃ der Leistung Pλ₁ des Lichtsignals LRV bzw. LRVF bei der ersten Wellenlänge λ₁ zur Leistung Pλ₃ des Lichtsignals LRV bzw. LRVF bei der dritten Wellenlänge λ₃ und in Abhängigkeit des Verhältnisses Pλ₃/Pλ₂ der Leistung Pλ₃ des Lichtsignals LRV bzw. LRVF bei der dritten Wellenlänge λ₃ zur Leistung Pλ₂ des Lichtsignals LRV bzw. LRVF bei der zweiten Wellenlänge λ₂ sowie in Abhängigkeit der (nicht in ein Verhältnis gesetzten) Leistung Pλ₁ des Lichtsignals LRV bzw. LRVF bei der ersten Wellenlänge λ₁, der (nicht in ein Verhältnis gesetzten) Leistung Pλ₂ des Lichtsignals LRV bzw. LRVF bei der zweiten Wellenlänge λ₂ und der (nicht in ein Verhältnis gesetzten) Leistung Pλ₃ des Lichtsignals LRV bzw. LRVF bei der dritten Wellenlänge λ₃ bestimmt wird. Dabei kann der Analysator 14 als Look-Up-Table oder als neuronales Netz, wie es in beispielhafter Ausgestaltung in Fig. 5 dargestellt ist, implementiert sein.

Das in Fig. 5 darstellte neuronale Netz umfasst sechs Eingangskoten 20, 21, 22, 23, 24, 25, sechs verdeckte Knoten 30, 31, 32, 33, 34, 35 und drei Ausgangsknoten 40, 41, 42, wobei jeder Eingangskoten 20, 21, 22, 23, 24, 25 mit jedem verdeckte Knoten 30, 31, 32, 33, 34, 35 (In Fig. 5 sind aus Gründen der Übersichtlichkeit nicht alle Verbindungen dargestellt.) und jeder verdeckte Knoten 30, 31, 32, 33, 34, 35 mit jedem Ausgangsknoten 40, 41, 42 verbunden ist.

Eingangsgröße in den Eingangskoten 20 ist die Leistung Pλ₁ des Lichtsignals LRV bzw. LRVF bei der ersten Wellenlänge λ₁, Eingangsgröße in den Eingangskoten 21 ist die Leistung Pλ₂ des Lichtsignals LRV bzw. LRVF bei der zweiten Wellenlänge λ₂, Eingangsgröße in den Eingangskoten 22 ist die Leistung Pλ₃ des Lichtsignals LRV bzw. LRVF bei der dritten Wellenlänge λ₃, Eingangsgröße in den Eingangskoten 23 ist das Verhältnis Pλ₁/Pλ₂ der Leistung Pλ₁ des Lichtsignals LRV bzw. LRVF bei der ersten Wellenlänge λ₁ zur Leistung Pλ₂ des Lichtsignals LRV bzw. LRVF bei der zweiten Wellenlänge λ₂, Eingangsgröße in den Eingangskoten 24 ist das Verhältnis Pλ₁/Pλ₃ der Leistung Pλ₁ des Lichtsignals LRV bzw. LRVF bei der ersten Wellenlänge λ₁ zur Leistung Pλ₃ des Lichtsignals LRV bzw. LRVF bei der dritten Wellenlänge λ₃, und Eingangsgröße in den Eingangskoten 25 ist das VerhältnisPλ₃/Pλ₂ der Leistung Pλ₃ des Lichtsignals LRV bzw. LRVF bei der dritten Wellenlänge λ₃ zur Leistung Pλ₂ des Lichtsignals LRV bzw. LRVF bei der zweiten Wellenlänge λ₂.

Im vorliegenden Ausführungsbeispiel ist vorgesehen, dass die Ausgangsknoten 40, 41, 42 binäre Ausgangsgrößen ausgeben, wobei die Ausgangsgröße des Ausgangsknotens 40 ,1' ist, wenn das neuronale Netz eine vereiste Fahrbahn erkennt, und andernfalls ,0' ist, wobei die Ausgangsgröße des Ausgangsknotens 41 ,1' ist, wenn das neuronale Netz eine nasse Fahrbahn erkennt, und andernfalls ,0' ist, und wobei die Ausgangsgröße des Ausgangsknotens 42 ,1' ist, wenn das neuronale Netz eine trockene Fahrbahn erkennt, und andernfalls ,0' ist. Es können auch mehr als drei Ausgangsknoten z.B. für vereiste Fahrbahn, für verschneite Fahrbahn, für nasse Fahrbahn, für verschmutze Fahrbahn, für Nebel, für schlechte oder fehlende Fahrbahn und/oder für trockene Fahrbahn vorgesehen werden. Im vorliegenden Fall ist für die Systeme, die als Eingangsgröße einen Wert eines Reibkoeffizienten der Fahrbahn 2 verarbeiten, vorgesehen, dass vorgenannte Zustände in Reibkoeffizienten der Fahrbahn 2 übersetzt werden. Dabei wird ,vereiste Fahrbahn' zu einem Reibkoeffizienten von µ = 0,1 übersetzt, ,nasse Fahrbahn' zu einem Reibkoeffizienten von µ = 0,4 übersetzt und ,trockene Fahrbahn' zu einem Reibkoeffizienten von µ = 0,8 übersetzt.

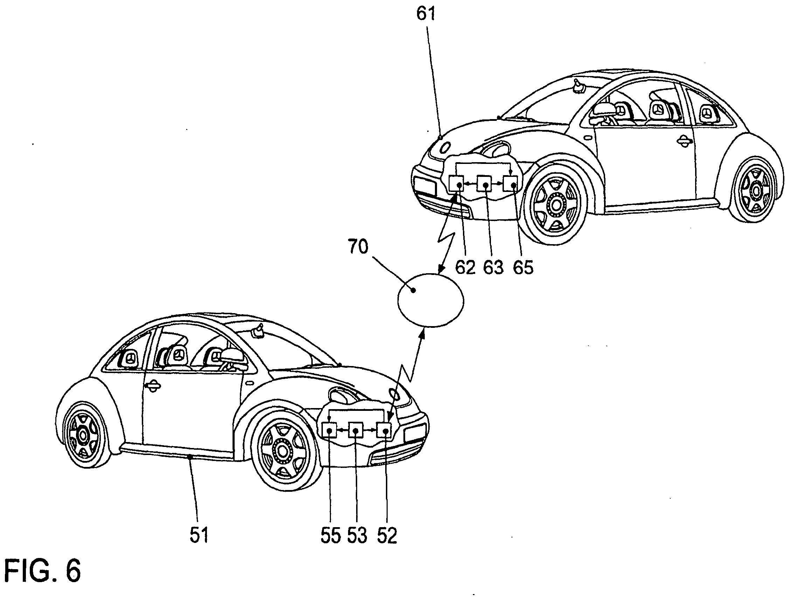

Fig. 6 zeigt ein Ausführungsbeispiel eines Transportsystems, wobei das Transportsystem zumindest ein erstes Kraftfahrzeug 51 mit einer Vorrichtung 53 zur Bestimmung der Beschaffenheit einer Oberfläche einer Fahrbahn und mit einem Sender 52 zum Senden einer Information über die Beschaffenheit der Oberfläche der Fahrbahn und zumindest ein zweites Kraftfahrzeug 61 mit einem Empfänger 62 zum Empfangen der Information über die Beschaffenheit der Oberfläche der Fahrbahn umfasst. Ein solcher Empfänger 62 kann einfach ein Radio oder ein mit einer Anzeige verbundener Empfänger zum Empfang einer von einer Zentrale ausgesandten Information über einen Fahrbahnzustand sein, wobei die Information über einen Fahrbahnzustand zuvor von dem ersten Kraftfahrzeug 51 an einen Radiosender bzw. die Zentrale gesandt worden ist.

Im vorliegenden Ausführungsbeispiel eines Transportsystems umfasst das erste Kraftfahrzeug 51 eine der Vorrichtung 5 zur Bestimmung der Beschaffenheit der Oberfläche der Fahrbahn 2 entsprechende Vorrichtung 53 zur Bestimmung der Beschaffenheit der Oberfläche einer ersten Fahrbahn und eine der Senke 15 entsprechende Senke 55 und das zweite Kraftfahrzeug 61 eine der Vorrichtung 5 zur Bestimmung der Beschaffenheit der Oberfläche der Fahrbahn 2 entsprechende Vorrichtung 63 zur Bestimmung der Beschaffenheit der Oberfläche einer zweiten Fahrbahn und eine der Senke 15 entsprechende Senke 65. Das erste Kraftfahrzeug 51 umfasst zudem eine Sende- und Empfangseinrichtung 52 zum Senden einer Information über die Beschaffenheit der Oberfläche der ersten Fahrbahn und zum Empfangen der Information über die Beschaffenheit der Oberfläche der zweiten Fahrbahn. Das zweite Kraftfahrzeug 61 umfasst zudem eine Sende- und Empfangseinrichtung 62 zum Senden der Information über die Beschaffenheit der Oberfläche der zweiten Fahrbahn und zum Empfangen der Information über die Beschaffenheit der Oberfläche der ersten Fahrbahn. Die Kommunikation zwischen der ersten Kraftfahrzeug 51 und dem zweien Kraftfahrzeug 61 erfolgt im vorliegenden Ausführungsbeispiel über eine Zentrale 70.

Die Anordnung und die Größe der Vorrichtungen 53, 63, der Senken 55, 65 und der Sende- und Empfangseinrichtungen 52, 62 in den Kraftfahrzeugen 51, 61 in Fig. 6 sind lediglich prinzipiell zu verstehen und geben nicht deren tatsächliche Anordnung und Größe wieder.

### Bezugszeichenliste

- 1, 51, 61: Kraftfahrzeug
- 2: Fahrbahn
- 3: Bereich
- 4: Rückspiegel
- 5, 53, 63: Vorrichtung zur Bestimmung der Beschaffenheit einer Oberfläche einer Fahrbahn
- 10: Infrarotstrahler
- 11: lichtempfindlicher Sensor
- 12: optisches Filter
- 14: Analysator
- 15, 55, 65: Senke
- 18: Aktor
- 20, 21, 22, 23, 24, 25: Eingangskoten
- 30, 31, 32, 33, 34, 35: verdeckte Knoten
- 40, 41, 42: Ausgangsknoten
- 52, 62: Sende- und Empfangseinrichtung
- 70: Zentrale
- D: Abstand
- LRVF: gefiltertes Lichtsignal
- LRV: Lichtsignal
- LTR: Infrarotstrahlung
- Pλ₁, Pλ₂, Pλ₃: Leistung
- ROAD: Fahrbahnbeschaffenheitsangabe
- v: Geschwindigkeit
- λ₁, λ₂, λ₃: Wellenlänge

## Patentansprüche

1. Kraftfahrzeug (1) mit einer Vorrichtung (5) zur Bestimmung der Beschaffenheit einer Oberfläche einer Fahrbahn (2), die Vorrichtung (5) umfassend:
einen lichtempfindlichen Sensor (11) zur Messung eines von der Oberfläche der Fahrbahn (2) reflektierten Lichtsignals (LVR); und
einen Analysator (14) zur Bestimmung einer Fahrbahnbeschaffenheitsangabe (ROAD) in Abhängigkeit der Leistung (Pλ₁, Pλ₂, Pλ₃) des Lichtsignals (LVR) bei einer ersten Wellenlänge (λ₁) im Infrarotbereich, bei einer zweiten Wellenlänge (λ₂) im Infrarotbereich sowie bei zumindest einer dritten Wellenlänge (λ₃) im Infrarotbereich,
**dadurch gekennzeichnet, dass** mittels des lichtempfindlichen Sensors (11) das in einem in Abhängigkeit der Geschwindigkeit (v) des Kraftfahrzeuges (1) einstellbaren Abstand (D) vor dem Kraftfahrzeug (1) von der Oberfläche der Fahrbahn (2) reflektierte Lichtsignal (LVR) messbar ist, wobei die Fahrbahnbeschaffenheitsangabe (ROAD) die Zustandsangaben ,Eis auf der Fahrbahn', ,Schnee auf der Fahrbahn', ,nasse Fahrbahn', und ,trockene Fahrbahn' umfasst.

2. Kraftfahrzeug (1) nach Anspruch 1, wobei die Beschaffenheit der Oberfläche der Fahrbahn (2) mittels des Analysators (14) in Abhängigkeit des Verhältnisses der Leistung (Pλ₁) des Lichtsignals (LVR) bei der ersten Wellenlänge (λ₁) zur Leistung (Pλ₂) des Lichtsignals (LVR) bei der zweiten Wellenlänge (λ₂), in Abhängigkeit des Verhältnisses der Leistung (Pλ₁) des Lichtsignals (LVR) bei der ersten Wellenlänge (λ₁) zur Leistung (Pλ₃) des Lichtsignals (LVR) bei der dritten Wellenlänge (λ₃) oder in Abhängigkeit des Verhältnisses der Leistung (Pλ₃) des Lichtsignals (LVR) bei der dritten Wellenlänge (λ₃) zur Leistung (Pλ₂) des Lichtsignals (LVR) bei der zweiten Wellenlänge (λ₂) bestimmbar ist.

3. Kraftfahrzeug (1) nach Anspruch 1, wobei die Beschaffenheit der Oberfläche der Fahrbahn (2) mittels des Analysators (14) in Abhängigkeit des Verhältnisses der Leistung (Pλ₁) des Lichtsignals (LVR) bei der ersten Wellenlänge (λ₁) zur Leistung (Pλ₂) des Lichtsignals (LVR) bei der zweiten Wellenlänge (λ₂), in Abhängigkeit des Verhältnisses der Leistung (Pλ₁) des Lichtsignals (LVR) bei der ersten Wellenlänge (λ₁) zur Leistung (Pλ₃) des Lichtsignals (LVR) bei der dritten Wellenlänge (λ₃) und in Abhängigkeit des Verhältnisses der Leistung (Pλ₃) des Lichtsignals (LVR) bei der dritten Wellenlänge (λ₃) zur Leistung (Pλ₂) des Lichtsignals (LVR) bei der zweiten Wellenlänge (λ₂) bestimmbar ist.

4. Kraftfahrzeug (1) nach einem der vorangehenden Ansprüche, wobei die erste Wellenlänge (λ₁) in einem Bereich zwischen 950 nm und 850 nm liegt.

5. Kraftfahrzeug (1) nach einem der vorangehenden Ansprüche, wobei die zweite Wellenlänge (λ₂) in einem Bereich zwischen 900 nm und 800 nm liegt.

6. Kraftfahrzeug (1) nach einem der vorangehenden Ansprüche, wobei die dritte Wellenlänge (λ₃) in einem Bereich zwischen 850 nm und 750 nm liegt.

7. Kraftfahrzeug (1) nach einem der vorangehenden Ansprüche, wobei mittels des lichtempfindlichen Sensors (11) das in einem proportional zur Geschwindigkeit (v) des Kraftfahrzeuges (1) einstellbaren Abstand (D) vor dem Kraftfahrzeug (1) von der Oberfläche der Fahrbahn (2) reflektierte Lichtsignal (LVR) messbar ist.

## Claims

1. Motor vehicle (1) having a device (5) for determining the constitution of a surface of a roadway (2), the device (5) comprising:
a light-sensitive sensor (11) for measuring a light signal (LVR) reflected from the surface of the roadway (2); and
an analyser (14) for determining a roadway constitution indication (ROAD) depending on the power (Pλ₁, Pλ**₂**, Pλ₃) of the light signal (LVR) at a first wavelength (λ₁) in the infrared range, at a second wavelength (λ₂) in the infrared range and at at least one third wavelength (λ₃) in the infrared range,
**characterized in that** the light signal (LVR) reflected from the surface of the roadway (2) at a distance (D) in front of the motor vehicle (1), said distance being adjustable depending on the speed (v) of the motor vehicle (1), is measurable by means of the light-sensitive sensor (11), wherein the roadway constitution indication (ROAD) comprises the state indications "ice on the roadway", "snow on the roadway", "wet roadway", and "dry roadway".

2. Motor vehicle (1) according to Claim 1, wherein the constitution of the surface of the roadway (2) is determinable by means of the analyser (14) depending on the ratio of the power (Pλ₁) of the light signal (LVR) at the first wavelength (λ₁) to the power (Pλ₂) of the light signal (LVR) at the second wavelength (λ₂), depending on the ratio of the power (Pλ₁) of the light signal (LVR) at the first wavelength (λ₁) to the power (Pλ₃) of the light signal (LVR) at the third wavelength (λ₃) or depending on the ratio of the power (Pλ₃) of the light signal (LVR) at the third wavelength (λ₃) to the power (Pλ₂) of the light signal (LVR) at the second wavelength (λ₂).

3. Motor vehicle (1) according to Claim 1, wherein the constitution of the surface of the roadway (2) is determinable by means of the analyser (14) depending on the ratio of the power (Pλ₁) of the light signal (LVR) at the first wavelength (λ₁) to the power (Pλ₂) of the light signal (LVR) at the second wavelength (λ₃), depending on the ratio of the power (Pλ₁) of the light signal (LVR) at the first wavelength (λ₃) to the power (Pλ₃) of the light signal (LVR) at the third wavelength (λ₃) and depending on the ratio of the power (Pλ₃) of the light signal (LVR) at the third wavelength (λ₃) to the power (Pλ₂) of the light signal (LVR) at the second wavelength (λ₂).

4. Motor vehicle (1) according to any of the preceding claims, wherein the first wavelength (λ₁) is in a range of between 950 nm and 850 nm.

5. Motor vehicle (1) according to any of the preceding claims, wherein the second wavelength (λ₂) is in a range of between 900 nm and 800 nm.

6. Motor vehicle (1) according to any of the preceding claims, wherein the third wavelength (λ₃) is in a range of between 850 nm and 750 nm.

7. Motor vehicle (1) according to any of the preceding claims, wherein the light signal (LVR) reflected from the surface of the roadway (2) at a distance (D) in front of the motor vehicle (1), said distance being adjustable proportionally to the speed (v) of the motor vehicle (1), is measurable by means of the light-sensitive sensor (11) .

## Revendications

1. Véhicule à moteur (1) avec un dispositif (5) destiné à la détermination de la nature de la surface d'une chaussée (2), ledit dispositif (5) comprenant :
un capteur photosensible (11) destiné à la mesure d'un signal lumineux (LVR) réfléchi par la surface de la chaussée (2) ; et
un analyseur (14) destiné à la détermination d'une indication relative à la nature de la chaussée (ROAD) en fonction de la puissance (Pλ₁, Pλ₂, Pλ₃) du signal lumineux (LVR) dans le cas d'une première longueur d'onde (λ₁) dans la plage infrarouge, dans le cas d'une deuxième longueur d'onde (λ₂) dans la plage infrarouge, ainsi que dans le cas de tout au moins une troisième longueur d'onde (λ₃) dans la plage infrarouge,
**caractérisé en ce que**
au moyen du capteur photosensible (11), le signal lumineux (LVR) réfléchi peut être mesuré à l'avant du véhicule à moteur (1) par la surface de la chaussée (2) dans une distance (D) pouvant être réglée en fonction de la vitesse (v) du véhicule à moteur (1), où l'indication relative à la nature de la chaussée (ROAD) comprend les indications suivantes relatives à l'état : « verglas sur la chaussée », « neige sur la chaussée », « chaussée mouillée », et « chaussée sèche ».

2. Véhicule à moteur (1) selon la revendication 1, où la nature de la surface de la chaussée (2) peut être déterminée au moyen de l'analyseur (14) en fonction du rapport de la puissance (Pλ₁) du signal lumineux (LVR) dans le cas de la première longueur d'onde (λ₁) par rapport à la puissance (Pλ₂) du signal lumineux (LVR) dans le cas de la deuxième longueur d'onde (λ₂), en fonction du rapport de la puissance (Pλ₁) du signal lumineux (LVR) dans le cas de la première longueur d'onde (λ₁) par rapport à la puissance (Pλ₃) du signal lumineux (LVR) dans le cas de la troisième longueur d'onde (λ₃) ou en fonction du rapport de la puissance (Pλ₃) du signal lumineux (LVR) dans le cas de la troisième longueur d'onde (λ₃) par rapport à la puissance (Pλ₂) du signal lumineux (LVR) dans le cas de la deuxième longueur d'onde (λ₂).

3. Véhicule à moteur (1) selon la revendication 1, où la nature de la surface de la chaussée (2) peut être déterminée au moyen de l'analyseur (14) en fonction du rapport de la puissance (Pλ₁) du signal lumineux (LVR) dans le cas de la première longueur d'onde (λ₁) par rapport à la puissance (Pλ₂) du signal lumineux (LVR) dans le cas de la deuxième longueur d'onde (λ₃), en fonction du rapport de la puissance (Pλ₁) du signal lumineux (LVR) dans le cas de la première longueur d'onde (λ₃) par rapport à la puissance (Pλ₃) du signal lumineux (LVR) dans le cas de la troisième longueur d'onde (λ₃) et en fonction du rapport de la puissance (Pλ₃) du signal lumineux (LVR) dans le cas de la troisième longueur d'onde (λ₃) par rapport à la puissance (Pλ₂) du signal lumineux (LVR) dans le cas de la deuxième longueur d'onde (λ₂).

4. Véhicule à moteur (1) selon l'une des revendications précédentes, où la première longueur d'onde (λ₁) se situe dans une plage comprise entre 950 nm et 850 nm.

5. Véhicule à moteur (1) selon l'une des revendications précédentes, où la deuxième longueur d'onde (λ₂) se situe dans une plage comprise entre 900 nm et 800 nm.

6. Véhicule à moteur (1) selon l'une des revendications précédentes, où la troisième longueur d'onde (λ₃) se situe dans une plage comprise entre 850 nm et 750 nm.

7. Véhicule à moteur (1) selon l'une des revendications précédentes, où, au moyen du capteur photosensible (11), le signal lumineux (LVR) réfléchi peut être mesuré à l'avant du véhicule à moteur (1) par la surface de la chaussée (2), dans une distance (D) pouvant être réglée de manière proportionnelle à la vitesse (v) du véhicule à moteur (1).
